# EUROPEAN PATENT SPECIFICATION

(11) **EP 4 411 353 B1**
(45) Date of publication and mention of the grant of the patent: **21.10.2026**
(21) Application number: 22875640.9
(22) Date of filing: 19.08.2022
(51) Int. Cl.: G06T 7/00, G06T 7/11, G01N 23/04, G01N 23/18

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT DE L'INFORMATION, PROCÉDÉ DE TRAITEMENT DE L'INFORMATION ET PROGRAMME

(30) Priority: 28.09.2021 JP 2021158214
(43) Date of publication of application: 07.08.2024
(73) Proprietor: FUJIFILM Corporation, Tokyo 106-8620 (JP)
(72) Inventor: YONAHA, Makoto, Tokyo 106-8620 (JP)
(74) Representative: Meissner Bolte Partnerschaft mbB
(86) International application number: PCT/JP2022/031319
(87) International publication number: WO 2023/053768

(56) References cited:
- WO-A1-2020/003917
- WO-A1-2021/176877
- JP-A- 2005 077 324
- JP-A- 2009 186 271
- JP-A- 2015 203 628
- JP-A- 2020 144 688
- JP-A- H0 792 094
- US-A1- 2021 072 165
- DU WANGZHE ET AL: "Automatic Defect Segmentation in X-Ray Images Based on Deep Learning", IEEE TRANSACTIONS ON INDUSTRIAL ELECTRONICS, IEEE SERVICE CENTER, PISCATAWAY, NJ, USA, vol. 68, no. 12, 31 December 2020 (2020-12-31), pages 12912 - 12920, XP011875355, ISSN: 0278-0046, [retrieved on 20210831], DOI: 10.1109/TIE.2020.3047060

## Description

### BACKGROUND OF THE INVENTION

### 1. Field of the Invention

The present disclosure relates to an information processing apparatus, an information processing method, and a program, and particularly relates to an information processing technique applied to processing of displaying a processing result of image processing.

### 2. Description of the Related Art

In non-destructive inspection of an industrial product using an X-ray transmission image or the like, defects such as air bubbles, foreign substances, and fissuring generated in a product to be inspected are detected by visual observation of an image obtained by capturing the product through transmission imaging, and whether the product is good or defective is determined.

An image processing apparatus disclosed in WO2016/174926A comprises: a radiation image acquisition unit that acquires a radiation image obtained by imaging an inspection object irradiated with radiation; a standard image storage unit that stores a standard image that is a normal radiation image of the inspection object imaged under the same imaging conditions as the radiation image acquired by the radiation image acquisition unit; a difference value detection unit that detects difference values of pixel values between corresponding pixels of the radiation image acquired by the radiation image acquisition unit and the standard image stored in the standard image storage unit; and a display control unit that causes a display unit to display a difference region between the radiation image and the standard image so that positive and negative of the difference values in the difference region can be determined, based on a detection result of the difference value detection unit.

A defect inspection apparatus disclosed in WO2017/130550A comprises: an image acquisition unit that acquires a light-receiving image created based on reflected light or transmitted light from an inspection object obtained by irradiating the inspection object with rays or radiation; an image processing unit that calculates a position and characteristics of a defect candidate on the inspection object from the light-receiving image; a storage unit that stores a calculation result of the position and characteristics of the defect candidate by the image processing unit, and a diagnosis result indicating whether or not the defect candidate is a defect, in accordance with the calculation result; and a simulation unit that analyzes occurrence and growth process of the defect from the calculation result and the diagnosis result by the image processing unit, which are stored in the storage unit, and that performs a simulation for predicting growth of the defect candidate. WO 2021/176877 A1 relates to handling a three-dimensional model and defect information of a building, wherein pins are distinguishably displayed in a manner corresponding to defect information. US 2021/072165 A1 relates to a defect display device for supporting inspection of defects in industrial products such as castings, wherein the defect display device displays a contour corresponding to a distribution of a plurality of defects among defects in an object, and changes display of the contour in accordance with a generation condition of the contour accepted through an input unit.

### SUMMARY OF THE INVENTION

In many cases, it is difficult to visually distinguish the defects reflected in the X-ray transmission image from a background due to a weak signal intensity, an unclear boundary, a minute size, or the like. In recent years, a method of extracting a region of a specific object from an image using an artificial intelligence (AI) technique has been developed. By utilizing such a region extraction type AI, it is expected that a minute defect is extracted with size and shape features.

However, even in a case in which information obtained by the processing of the region extraction type AI is displayed on a monitor as it is, there is a probability that an inspector may overlook the information in a case in which a defect size is small or in a case in which a display size of the defect displayed on the monitor is small.

The present disclosure has been made in view of such circumstances, and an object of the present disclosure is to provide an information processing apparatus, an information processing method, and a program capable of improving visibility of a detection target extracted from an image and realizing display that can prevent overlooking.

The present invention is defined by independent claims 1, 4, 13 and 14 as appended.

According to the aspect, it is possible to switch the aspect in which the result of the processing is displayed according to at least one of the size of the extracted region or the display size of the region displayed on the display screen, and to display information indicating a position or region of the detection target in the image in an easily visible manner. Thereby, it is possible to prevent the detection target from being overlooked.

In the information processing apparatus according to another aspect of the present disclosure, the processor may use a segmentation model that performs image segmentation to execute the processing of the region extraction.

In the information processing apparatus according to still another aspect of the present disclosure, the segmentation model may be a learning model trained using machine learning to extract the region of the detection target from an input image.

In the information processing apparatus according to still another aspect of the present disclosure, the position information may include information indicating a position of a centroid or a center of a circumscribed rectangle of the extracted region.

In the information processing apparatus according to still another aspect of the present disclosure, the second display aspect may include segmentation mask display in which the extracted region is filled and displayed.

In the information processing apparatus according to still another aspect of the present disclosure, the processor may perform display in the first display aspect in a case in which the size of the extracted region is smaller than a first reference size, and perform display in the second display aspect in a case in which the size of the extracted region is larger than the first reference size.

In the information processing apparatus according to still another aspect of the present disclosure, the processor may perform display in the first display aspect in a case in which the display size of the region displayed on the display screen is smaller than a second reference size, and perform display in the second display aspect in a case in which the display size is larger than the second reference size.

In the information processing apparatus according to still another aspect of the present disclosure, the processor may receive an instruction to perform enlargement display and reduction display, change a display magnification of the display screen in accordance with the received instruction, and switch between the first display aspect and the second display aspect in accordance with the display magnification.

The information processing apparatus according to still another aspect of the present disclosure may further comprise: an input device that receives an input of the instruction to perform the enlargement display and the reduction display.

The information processing apparatus according to still another aspect of the present disclosure may further comprise: a display device that displays the result of the processing.

In the information processing apparatus according to still another aspect of the present disclosure, the image may be an X-ray transmission image.

In the information processing apparatus according to still another aspect of the present disclosure, the image may be an X-ray transmission image of a cast metal component, a forged metal component, or a welded metal component.

In the information processing apparatus according to still another aspect of the present disclosure, the detection target may be a defect.

In the information processing apparatus according to still another aspect of the present disclosure, the defect may include at least one of an air bubble, a porosity, foreign material less dense (FMLD), or foreign material more dense (FMMD).

According to the present disclosure, it is possible to display a region and/or a position of a detection target in an image in an easily visible manner and to prevent the detection target from being overlooked.

### BRIEF DESCRIPTION OF THE DRAWINGS

Fig. 1 is a schematic diagram showing a configuration example of a captured image processing system according to an embodiment.
Fig. 2 is a diagram schematically showing a display example of an inspection image obtained through processing by an information processing apparatus.
Fig. 3 is a display example of an inspection image in which a minute defect is detected.
Fig. 4 is a display example of an inspection image in which a plurality of defects are detected.
Fig. 5 is a display example of a case in which a part of the inspection image of Fig. 3 is enlarged and displayed.
Fig. 6 is a block diagram showing a configuration example of hardware of the information processing apparatus according to the embodiment.
Fig. 7 is a flowchart showing Example 1 of an operation by the information processing apparatus according to the embodiment.
Fig. 8 is a flowchart showing Example 2 of an operation by the information processing apparatus according to the embodiment.
Fig. 9 is a flowchart showing Example 3 of an operation by the information processing apparatus according to the embodiment.
Fig. 10 is a flowchart showing Example 4 of an operation by the information processing apparatus according to the embodiment.
Fig. 11 is a flowchart showing Example 5 of an operation by the information processing apparatus according to the embodiment.
Fig. 12 is a block diagram showing a configuration example of an imaging system.

### DESCRIPTION OF THE PREFERRED EMBODIMENTS

Hereinafter, a preferred embodiment of the present invention will be described with reference to the accompanying drawings. In the present specification, the same components are denoted by the same reference numerals, and duplicate description thereof will be omitted as appropriate.

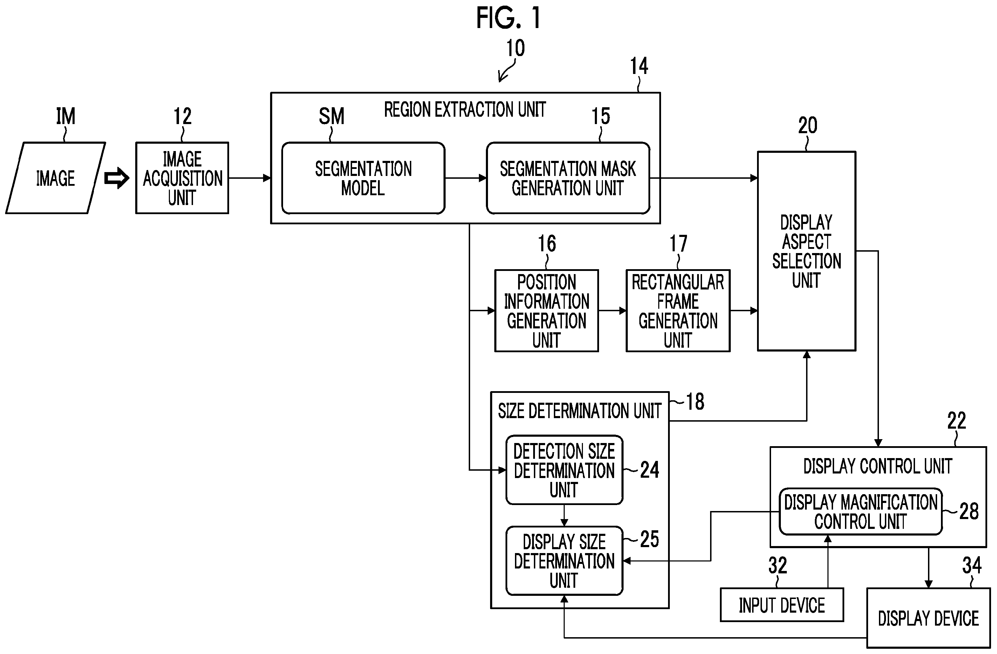

Fig. 1 is a functional block diagram schematically showing a functional configuration of an information processing apparatus 10 according to an embodiment of the present disclosure. Here, an example of the information processing apparatus 10 that is applied to an industrial X-ray inspection system that non-destructively inspects an object will be shown. The information processing apparatus 10 is an apparatus that executes processing of region extraction to extract a region of a defect from an image IM obtained by capturing an industrial product to be inspected and that displays a result of the processing on a display device 34.

The information processing apparatus 10 can be realized by a combination of hardware and software of a computer. The software is synonymous with a program. A computer that functions as the information processing apparatus 10 may be a workstation, a personal computer, a tablet terminal, or a server.

The information processing apparatus 10 includes an image acquisition unit 12, a region extraction unit 14, a position information generation unit 16, a rectangular frame generation unit 17, a size determination unit 18, a display aspect selection unit 20, and a display control unit 22. In addition, the information processing apparatus 10 can be connected to an input device 32 and the display device 34. The term "connection" is not limited to wired connection, and may be wireless connection.

The image acquisition unit 12 receives an input of the image IM to be processed and acquires the image IM. The image IM is, for example, an X-ray transmission image obtained by irradiating a metal component as an object to be inspected with X-rays. The image acquisition unit 12 may be configured to include a communication interface for receiving the image IM from an external device such as an imaging device or an image management server, or may be configured to include a media interface for reading the image IM from a removable medium such as a memory card. In addition, the image acquisition unit 12 may be configured to include an image acquisition program for automatically acquiring the image IM from the external device. The image IM acquired via the image acquisition unit 12 is sent to the region extraction unit 14.

The region extraction unit 14 is an AI processing unit that executes the processing of the region extraction on the image IM using a segmentation model SM to extract a region of a defect, which is a detection target, from the image IM. The segmentation model SM is a learning model trained using machine learning to execute a task of image segmentation, and divides the input image IM into regions by classifying the whole image (all pixels) in the image IM by one pixel unit as to whether or not it is a region of a defect.

The defect in a cast or forged metal component or a welded metal component includes, for example, at least one of an air bubble, a porosity, foreign material less dense (FMLD), or foreign material more dense (FMMD). The FMLD is incorporation of defects of foreign substances (low density) that appear black in the X-ray transmission image. The FMMD is incorporation of defects of foreign substances (high density) that appear white in the X-ray transmission image.

The segmentation model SM may be a model that performs classification detection of two classes as to whether each pixel is a region of a defect or the rest, or a model that performs classification detection of multiple classes such as determining a type of a defect for each pixel. The segmentation model SM is configured by using, for example, a convolutional neural network (CNN) having a convolutional layer. A fully convolution network (FCN), which is a type of the CNN, is one of models suitable for a task of image segmentation. As the segmentation model SM of this example, for example, a neural network having a network structure called "U-net", which is a type of the FCN, can be applied.

In the segmentation model SM, a parameter of a learning model is optimized by machine learning using a learning data set including a large number of learning data (training data) in which a learning image and ground truth data for the image are associated with each other. Here, the ground truth data is data indicating a region of a defect existing in the image, and may be, for example, a mask image in which the region of the defect is filled.

The segmentation model SM generates, for the received image IM, a score indicating certainty of classification for each pixel in the image IM, that is, defect likelihood. The region extraction unit 14 includes a segmentation mask generation unit 15 that generates a segmentation mask based on the score generated by the segmentation model SM.

The segmentation mask is a mask image in which a region of a defect in the image IM is filled, and represents a shape of the extracted defect in units of pixels. The segmentation mask generation unit 15 generates the segmentation mask by binarizing a pixel value by using a threshold value with respect to the score indicating the defect likelihood of each pixel obtained by the segmentation model SM, and labeling a cluster (connected region) of pixels in which potential defects are connected as a region of the same defect. A plurality of defect regions may be extracted from one image IM. In this case, the segmentation mask is generated for each of the plurality of extracted defect regions.

In Fig. 1, the segmentation model SM and the segmentation mask generation unit 15 are illustrated in a distinguishable manner, but the segmentation mask generation unit 15 may be incorporated into the segmentation model SM. The segmentation mask obtained by image segmentation in the region extraction unit 14 or data labeled with a defect label can be region information of a defect extracted from the image IM.

The position information generation unit 16 generates position information indicating a position (detection position) of the defect region based on the region information of the defect obtained by the processing of the region extraction unit 14. In a case in which a plurality of defect regions are extracted from the image IM, the position information is generated for each of the plurality of defect regions. The position information may be, for example, image coordinates indicating a position of a centroid of the defect region, or may be image coordinates indicating a position of a center of a circumscribed rectangle of the defect region. Generating the position information from the region information may be understood as converting the region information into the position information.

The rectangular frame generation unit 17 generates, based on the position information generated by the position information generation unit 16, a rectangular frame surrounding the detection position of the defect indicated by the position information. For example, the rectangular frame generation unit 17 generates a rectangular frame centered on centroid coordinates of the extracted defect region. In addition, the term "rectangular" includes a square. The rectangular frame is displayed on a display screen of the display device 34 as information for visually appealing and informing of the detection position of the defect. From the viewpoint of preventing the detected defect from being overlooked, it is desirable that the rectangular frame has a rectangular size enough to be easily visible on the display screen. The size of the rectangular frame may be a fixed size set in advance.

In the information processing apparatus 10, the size determination unit 18 determines a size of the defect, and switches a display aspect between an aspect in which the rectangular frame is displayed and an aspect in which the segmentation mask is displayed without displaying the rectangular frame in accordance with a determination result.

The position information generation unit 16 may generate the position information for all of the defect regions extracted by the region extraction unit 14, or may generate the position information in a case in which the display of the rectangular frame is needed, based on the determination result of the size determination unit 18. Similarly, the rectangular frame generation unit 17 may generate the rectangular frame for all of the defect regions extracted by the region extraction unit 14, or may generate the rectangular frame in a case in which the display of the rectangular frame is needed, based on the determination result of the size determination unit 18.

The size of the defect determined by the size determination unit 18 can include a detection size indicating the size of the defect region extracted by the region extraction unit 14, a display size indicating the size of the defect region displayed on the display screen of the display device 34. The size determination unit 18 includes a detection size determination unit 24 and a display size determination unit 25.

The detection size determination unit 24 determines the size (detection size) of the defect region extracted by the region extraction unit 14. The detection size determination unit 24 can obtain an area of the defect region, for example, by counting the number of pixels of the defect region for each extracted defect region. The detection size may be represented by a count value of the pixels of the defect region, or may be represented in a unit of an area obtained by multiplying the count value by an area of one pixel.

The detection size determination unit 24 compares the detection size with a first reference size Th1 and provides a comparison result to the display aspect selection unit 20. In a case in which the detection size is smaller than the first reference size Th1, it is determined that the probability of overlooking is high.

The display size determination unit 25 determines the size (display size) of the defect region displayed on the display screen of the display device 34. The visibility of the defect region on an actual display screen can differ depending on display conditions such as specifications of the display device 34 that include a screen size and resolution of the display device 34 and a display magnification designated from the input device 32. The display size determination unit 25 may acquire information about the display conditions including the specifications (display condition information) from the display device 34, or may receive information input from the input device 32.

The display size determination unit 25 evaluates the display size of the defect region on the display screen based on the region information of the defect and the display conditions, and provides a result of comparison between the display size and a second reference size Th2 to the display aspect selection unit 20. In a case in which the display size is smaller than the second reference size Th2, it is determined that the probability of overlooking is high.

The display aspect selection unit 20 performs a process of selecting a display aspect of the result of the processing of the region extraction by the region extraction unit 14 based on the determination result of the size determination unit 18. That is, the display aspect selection unit 20 performs a process of switching between a first display aspect in which the rectangular frame is displayed and a second display aspect in which the segmentation mask is displayed, in accordance with the determination result from the size determination unit 18. Selecting the display aspect may be understood as determining the display aspect. The display aspect is changed by selecting a different display aspect.

The first display aspect may be referred to as a rectangular frame method, and the second display aspect may be referred to as a coloring method. The coloring method may also be referred as a filling method or a segmentation mask method. The rectangular frame method is not limited to the aspect in which the rectangular frame is displayed without displaying the segmentation mask, and may be a display method including an aspect in which the segmentation mask is displayed and the rectangular frame is displayed. On the other hand, the coloring method is a display method of displaying the segmentation mask without displaying the rectangular frame. Switching between the rectangular frame method and the coloring method includes a concept of switching between the presence and absence of the display of the rectangular frame.

The display control unit 22 performs a process of generating display data necessary for displaying the result of the processing according to a selection result of the display aspect selection unit 20, and controls the display on the display device 34. In a case in which a resolution (recording resolution) of the image IM is larger than a screen resolution (monitor resolution) of the display device 34, that is, in a case in which the resolution of the image IM is higher than the resolution of the display device 34, the data of the image IM is thinned out and displayed in a case in which the image IM is displayed on the display device 34. Then, as necessary, an instruction to perform enlargement display or reduction display is received, and the display magnification is changed according to the instruction to perform the enlargement display or the reduction display.

The display control unit 22 includes a display magnification control unit 28. The display magnification control unit 28 performs enlargement processing or reduction processing of the display according to the instruction received via the input device 32. For example, in a case in which a reference display magnification in the display device 34 is 100%, the display magnification control unit 28 can change the display magnification in a range from 10% to 500% according to a designation from the input device 32. The present disclosure is not limited to the configuration in which the display magnification can be changed, and a form in which the display magnification is fixed is also possible. In this case, processing units such as the display magnification control unit 28 and the display size determination unit 25 may be omitted. In addition, as another form, it is possible to omit the detection size determination unit 24 and use the display size determination unit 25 to determine the defect size on the display screen, regardless of the presence or absence of the display magnification changing function.

The input device 32 is configured of, for example, a keyboard, a mouse, a multi-touch panel, another pointing device, a sound input device, or an appropriate combination thereof. The display device 34 is configured of, for example, a liquid crystal display, an organic electroluminescence (OEL) display, a projector, or an appropriate combination thereof. The input device 32 and the display device 34 may be integrally configured like a touch panel. The input device 32 and the display device 34 may be an input device and a display device of a terminal device connected to the information processing apparatus 10 via a communication line.

### <<Display Example of Inspection Image>>

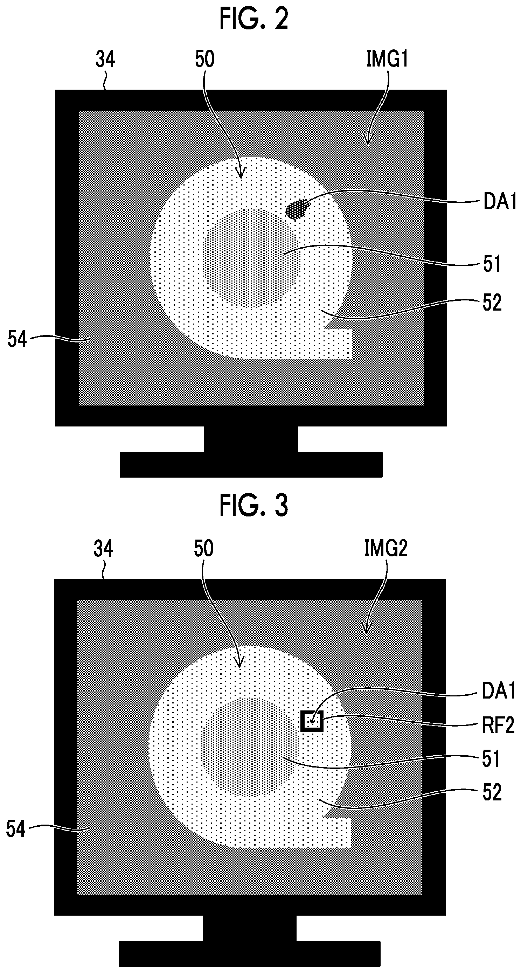

Figs. 2 to 5 schematically show a display example of an inspection image obtained through processing by the information processing apparatus 10. In an inspection image IMG1 shown in Fig. 2, a metal component 50, which is an object to be inspected, is reflected. The metal component 50 is molded, for example, by casting or forging, and has a first component portion 51 having a relatively thin wall thickness and a second component portion 52 having a thicker wall thickness than the first component portion. In the inspection image IMG1, an outside region of the metal component 50 is a region of a background 54.

In the inspection image IMG1, a defect is detected in the second component portion 52 of the metal component 50, and a segmentation mask indicating region information of a detected defect region DA1 is displayed. In a case in which the extracted defect region DA1 is larger than the first reference size and the segmentation mask is displayed in a sufficiently visible size on the display screen of the display device 34, a segmentation mask in which the defect region DA1 is filled is displayed as shown in Fig. 2.

In order to improve the visibility of the segmentation mask on the display screen, it is preferable that a color used for filling is a chromatic color that contributes to visual differentiation from the surrounding non-defect region (region other than the defect). In addition, at least one of hue, brightness, or chroma saturation of the segmentation mask may be made different between a case in which a defect is detected in the first component portion 51 and a case in which a defect is detected in the second component portion 52. The display of the segmentation mask may be blinking (intermittent display).

Fig. 3 is a display example of an inspection image IMG2 in which a minute defect is detected. In a case in which a detected defect region DA2 is smaller than the first reference size Th1 and is reduced to a level that is difficult to be visually recognized on the display screen of the display device 34 even in a case in which a segmentation mask of the defect region DA2 is displayed, a rectangular frame RF2 for visually appealing and informing of a detection position of the defect region DA2 is displayed as shown in Fig. 3. For example, in a case in which the display size is several pixels or less on the display screen, the rectangular frame RF2 is displayed. The display of the rectangular frame RF2 may be blinking.

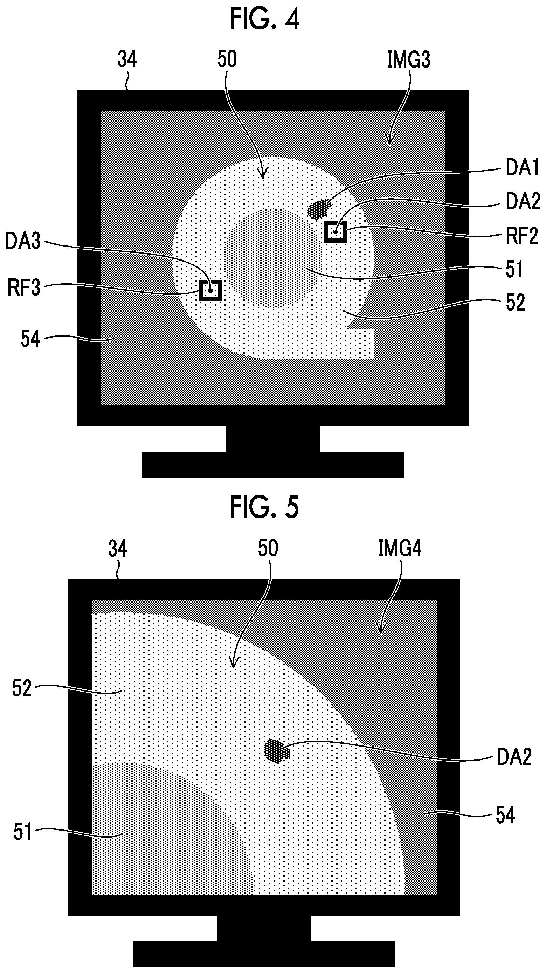

Fig. 4 is a display example of an inspection image IMG3 in which a plurality of defects are detected. In the inspection image IMG3 shown in Fig. 4, the segmentation mask display and the rectangular frame display are mixed in accordance with a size of a detected defect. For a defect region DA1 extracted in the inspection image IMG3, a segmentation mask is displayed as in Fig. 2, and for minute defect regions DA2 and DA3 that are likely to be overlooked, rectangular frames RF2 and RF3 are displayed as in Fig. 3. The display of the rectangular frames RF2 and RF3 may be set to blinking, and the display of the segmentation mask may be set to a constant display (non-blinking).

Fig. 5 is a display example of an inspection image IMG4 in which a part of the inspection image IMG2 of Fig. 3 is enlarged and displayed. In a case in which the display size of the defect region DA2 is larger than the second reference size Th2 due to the enlargement display, the display of the rectangular frame RF2 in Fig. 3 is switched to the coloring method as shown in Fig. 5, and a segmentation mask indicating the region information of the defect region DA2 is displayed.

Although not shown, in a case in which an instruction to perform reduction display of decreasing the display magnification from the display state of Fig. 2 or Fig. 5 is received and the display sizes of the defect regions DA1 and DA2 are smaller than the second reference size, the coloring method is switched to the display of the rectangular frame method. The size of the rectangular frame displayed on the display screen may be fixed in a case in which the display magnification is changed to perform the enlargement display or reduction display.

Figs. 2 to 5 illustrate the inspection image of the metal component 50 molded by casting or forging, but the same applies to a case in which a welding defect is detected from an X-ray transmission image of a welded metal component.

### <<Configuration Example of Information Processing Apparatus 10>>

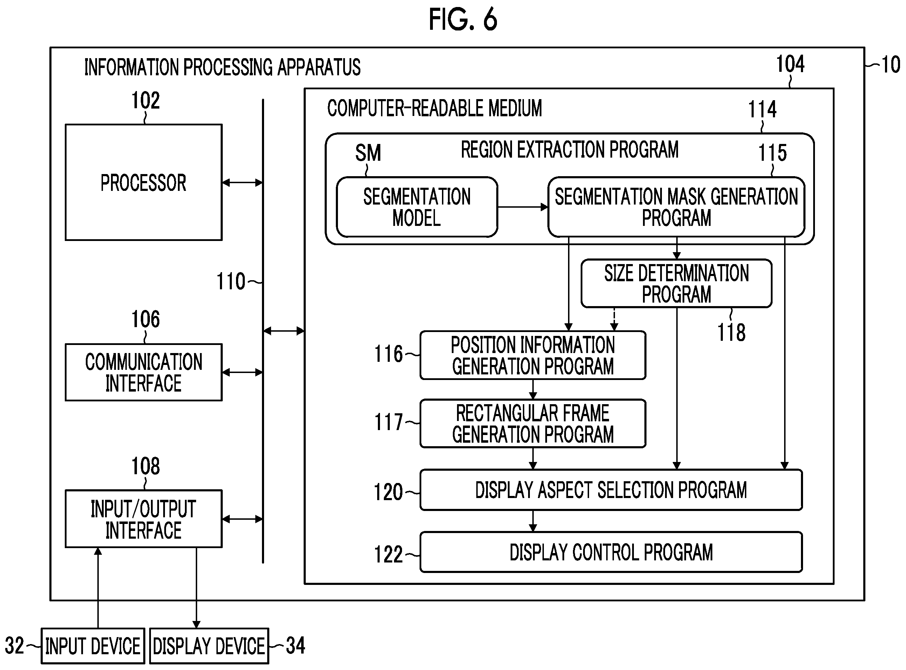

Fig. 6 is a block diagram showing a configuration example of hardware of the information processing apparatus 10 according to the embodiment. The information processing apparatus 10 includes a processor 102, a computer-readable medium 104 that is a non-transitory tangible object, a communication interface 106, and an input/output interface 108.

The processor 102 includes a central processing unit (CPU). The processor 102 may include a graphics processing unit (GPU). The processor 102 is connected to the computer-readable medium 104, the communication interface 106, and the input/output interface 108 via a bus 110.

The input device 32 and the display device 34 are connected to the bus 110 via the input/output interface 108.

The computer-readable medium 104 includes a memory which is a main memory and a storage which is an auxiliary memory. The computer-readable medium 104 may be, for example, a semiconductor memory, a hard disk drive (HDD) device, a solid state drive (SSD) device, or a combination of a plurality thereof.

The computer-readable medium 104 stores various programs, data, and the like including a region extraction program 114, a position information generation program 116, a rectangular frame generation program 117, a size determination program 118, a display aspect selection program 120, and a display control program 122. The term "program" includes a concept of a program module. The region extraction program 114 includes a segmentation model SM and a segmentation mask generation program 115.

The region extraction program 114 is a program for causing the processor 102 to realize the function as the region extraction unit 14. Similarly, the position information generation program 116, the rectangular frame generation program 117, the size determination program 118, the display aspect selection program 120, and the display control program 122 are programs for causing the processor 102 to realize the functions as respective processing units of the position information generation unit 16, the rectangular frame generation unit 17, the size determination unit 18, the display aspect selection unit 20, and the display control unit 22.

### <<Example 1 of Information Processing Method executed by Information Processing Apparatus 10>>

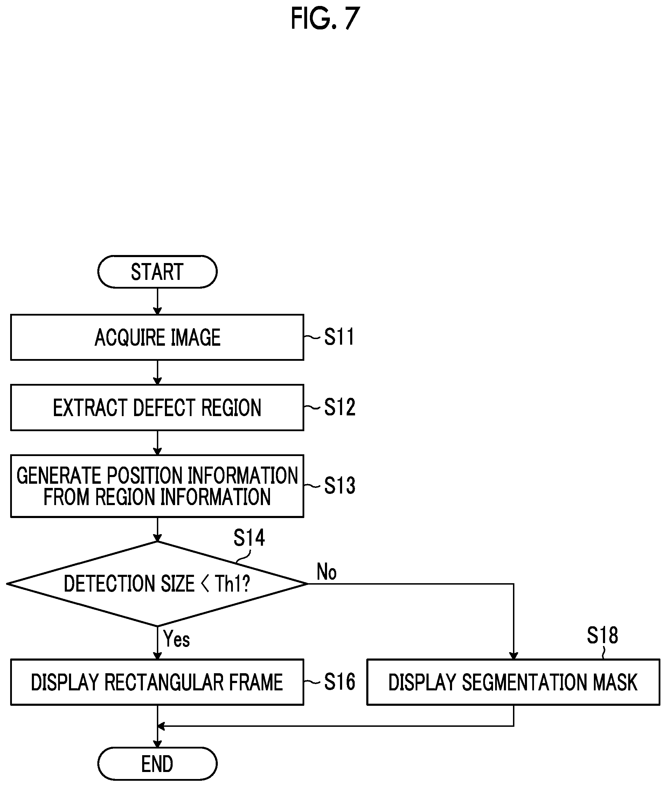

Fig. 7 is a flowchart showing Example 1 of an operation by the information processing apparatus 10 according to the embodiment. The flowchart in Fig. 7 can be applied to, for example, a case of an apparatus configuration in which the display magnification is fixed or a case in which the display magnification is set to 100%.

In step S11, the processor 102 acquires an image to be processed. In step S12, the processor 102 executes processing of region extraction to extract a region of a defect using the segmentation model SM on the acquired image.

Next, in step S13, the processor 102 generates position information from region information of the defect obtained by the processing of the region extraction.

In step S14, the processor 102 determines whether or not a size (detection size) of the defect understood from the region information is smaller than the first reference size Th1. In a case in which a determination result in step S14 is Yes determination, that is, in a case in which the detection size is smaller than the first reference size Th1, the processor 102 proceeds to step S16.

In step S16, the processor 102 adopts a rectangular frame method and displays a rectangular frame for informing of a position (detection position) of the defect based on the position information.

On the other hand, in a case in which the determination result in step S14 is No determination, that is, in a case in which the detection size is larger than the first reference size Th1 or the detection size is equal to the first reference size Th1, the processor 102 proceeds to step S18. Note that, in step S14, in a case in which the detection size is equal to the first reference size Th1, an aspect may be adopted in which the processor 102 proceeds to step S16 instead of step S18.

In step S18, the processor 102 adopts a coloring method, and displays a segmentation mask without displaying the rectangular frame.

In a case in which a plurality of defect regions are detected from the image, the processes of step S14 to step S18 are performed for each of the defect regions.

After step S16 or step S18, the processor 102 ends the flowchart in Fig. 7.

### <<Example 2 of Information Processing Method executed by Information Processing Apparatus 10>>

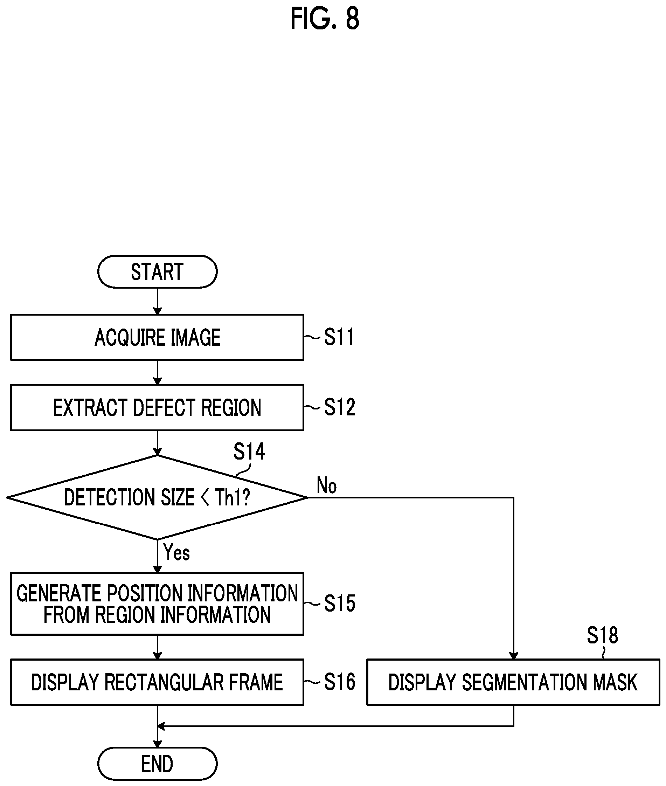

Fig. 8 is a flowchart showing Example 2 of an operation by the information processing apparatus 10 according to the embodiment. In the flowchart shown in Fig. 8, steps common to steps in Fig. 7 are denoted by the same step numbers, and the redundant description will be omitted. Instead of the flowchart in Fig. 7, the flowchart of Fig. 8 may be applied. A difference from Fig. 7 will be described with reference to Fig. 8.

In the flowchart in Fig. 8, the process of step S13 of Fig. 7 is executed as step S15 after the Yes determination of step S 14. That is, after step S12 of Fig. 8, the processor 102 proceeds to step S14 to determine the detection size. In a case in which the determination result in step S14 is Yes determination, the processor 102 proceeds to step S15.

In step S15, the processor 102 generates position information from region information of the defect obtained by the processing of the region extraction. After step S15, the processor 102 proceeds to step S16 to display a rectangular frame.

On the other hand, in a case in which the determination result in step S14 is No determination, the processor 102 proceeds to step S18 to display a segmentation mask.

After step S16 or step S18, the processor 102 ends the flowchart in Fig. 8.

### <<Example 3 of Information Processing Method executed by Information Processing Apparatus 10>>

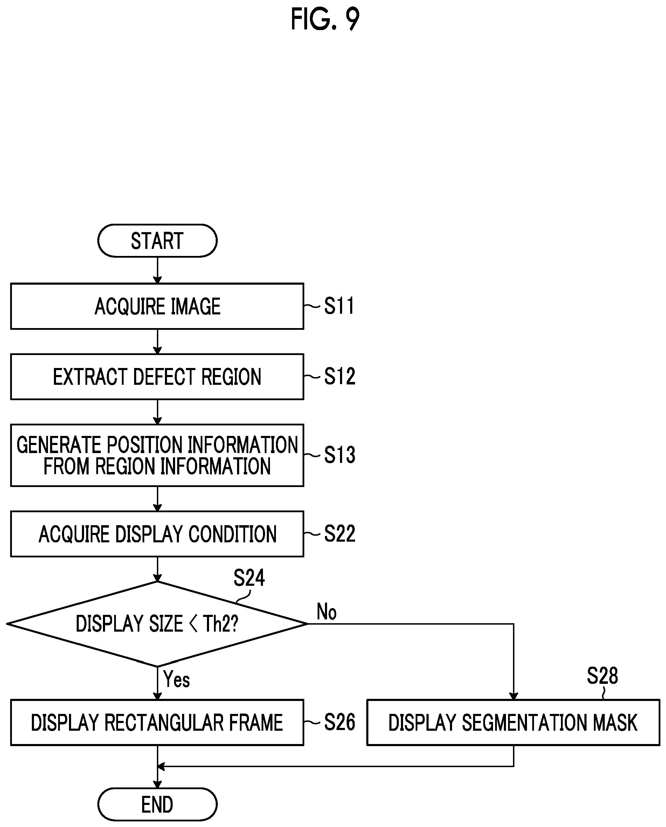

Fig. 9 is a flowchart showing Example 3 of an operation by the information processing apparatus 10 according to the embodiment. The flowchart in Fig. 9 can be applied to, for example, a form in which the detection size determination unit 24 is not provided. In the flowchart shown in Fig. 9, steps common to steps in Fig. 7 are denoted by the same step numbers, and the redundant description will be omitted. A difference from Fig. 7 will be described with reference to Fig. 9.

In the flowchart in Fig. 9, steps S22 to S28 are included instead of steps S14 to S18 of Fig. 7.

After step S13, the processor 102 proceeds to step S22. In step S22, the processor 102 acquires display conditions. The specifications of the display device 34 among the display conditions may be stored in the computer-readable medium 104 in advance.

After step S22, in step S24, the processor 102 calculates the display size of the defect based on the region information of the extracted defect and the display conditions, and determines whether or not the display size is smaller than the second reference size Th2.

In a case in which a determination result in step S24 is Yes determination, that is, in a case in which the display size is smaller than the second reference size Th2, the processor 102 proceeds to step S26. Step S26 is the same process as step S16 in Fig. 7.

On the other hand, in a case in which the determination result in step S24 is No determination, that is, in a case in which the display size is larger than the second reference size Th2 or the display size is equal to the second reference size Th2, the processor 102 proceeds to step S28. Step S28 is the same process as step S18 in Fig. 7. Note that, in step S24, in a case in which the display size is equal to the second reference size Th2, an aspect may be adopted in which the processor 102 proceeds to step S26 instead of step S28.

In a case in which a plurality of defect regions are detected from the image, the processes of step S24 to step S28 are performed for each of the defect regions.

After step S26 or step S28, the processor 102 ends the flowchart in Fig. 9. Also in the flowchart in Fig. 9, the process of step S13 may be executed after the Yes determination of step S24 (between step S24 and step S26) as in Fig. 8.

### <<Example 4 of Information Processing Method executed by Information Processing Apparatus 10>>

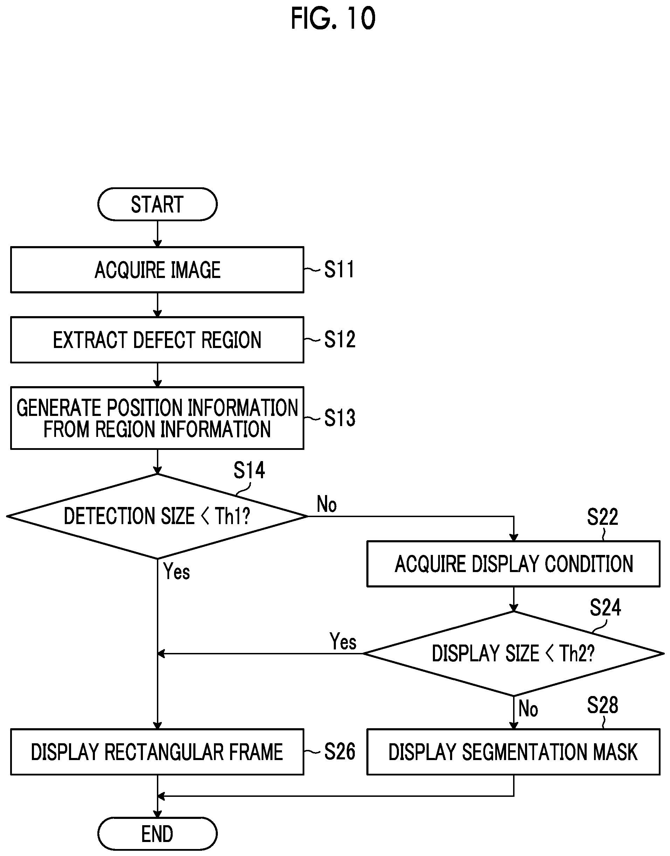

Fig. 10 is a flowchart showing Example 4 of an operation by the information processing apparatus 10 according to the embodiment. The flowchart in Fig. 10 is an example in which the display aspect is controlled by utilizing both the detection size determination unit 24 and the display size determination unit 25. In the flowchart shown in Fig. 10, steps common to steps in Figs. 7 and 9 are denoted by the same step numbers, and the redundant description will be omitted. A difference from Fig. 7 will be described with reference to Fig. 10.

In the flowchart of Fig. 10, steps S22, S24, and S28 are included instead of step S18 of Fig. 7, and step S26 is included instead of step S16 of Fig. 7. That is, in a case in which the determination result in step S14 is No determination, the processor 102 proceeds to step S22 to acquire display conditions.

Next, in a case in which the determination result in step S24 is Yes determination, the processor 102 proceeds to step S26 to display a rectangular frame. On the other hand, in a case in which the determination result in step S24 is No determination, the processor 102 proceeds to step S28 to display a segmentation mask.

In a case in which a plurality of defect regions are detected from the image, the processes of step S14 to step S28 are performed for each of the defect regions.

After step S26 or step S28, the processor 102 ends the flowchart in Fig. 10. Also in the flowchart in Fig. 10, the process of step S13 may be executed after the Yes determination of step S14 and the Yes determination of step S24 as in Fig. 8.

### <<Example 5 of Information Processing Method executed by Information Processing Apparatus 10>>

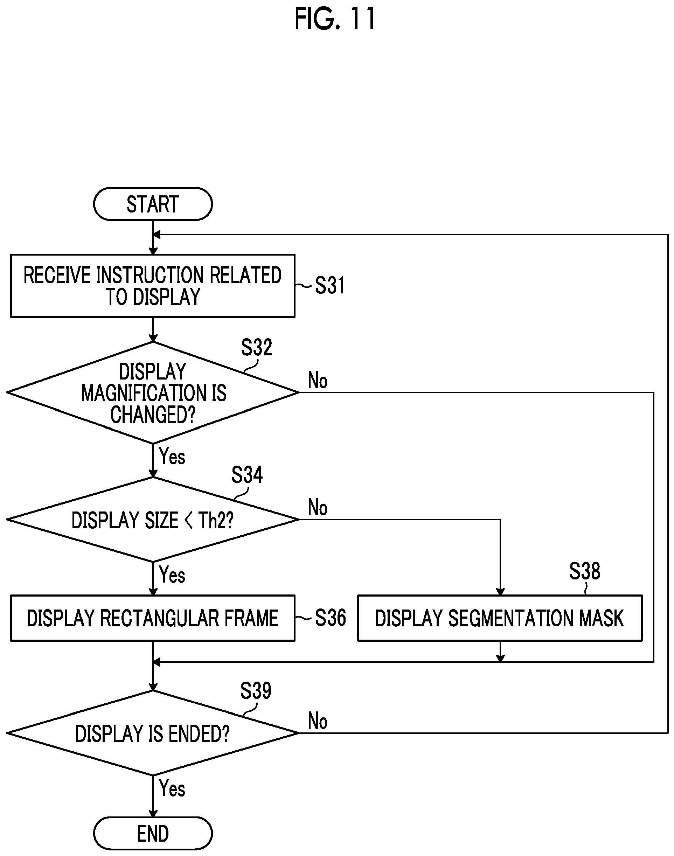

Fig. 11 is a flowchart showing Example 5 of an operation by the information processing apparatus 10 according to the embodiment. The flowchart in Fig. 11 is an example of control of switching between a rectangular frame method and a coloring method in conjunction with the enlargement or reduction operation. The flowchart in Fig. 11 is executed after any flowchart of Figs. 7 to 10 is executed.

In step S31, the processor 102 receives an instruction related to the display. A user can input an instruction to change the display magnification, an instruction to end the display, or the like from the input device 32.

In step S32, the processor 102 determines whether or not the instruction to change the display magnification has been received. In a case in which the enlargement or reduction operation is performed by the user and a determination result in step S32 is Yes determination, the processor 102 proceeds to step S34. Step S34, step S36, and step S38 are the same processes as step S24, step S26, and step S28 described with reference to Fig. 9.

In step S34, the processor 102 determines the display size of the defect on the display screen using the designated display magnification. In a case in which the display size is smaller than the second reference size Th2 and a determination result in step S34 is Yes determination, the processor 102 proceeds to step S36 to display a rectangular frame. On the other hand, in a case in which the determination result in step S34 is No determination, that is, in a case in which the display size is larger than the second reference size Th2 or the display size is equal to the second reference size Th2, the processor 102 proceeds to step S38 to display a segmentation mask.

After step S36 or step S38, the processor 102 proceeds to step S39. In a case in which a plurality of defect regions are detected from the image, the processes of step S34 to step S38 are performed for each of the defect regions. In addition, in a case in which the determination result in step S32 is No determination, the processor 102 proceeds to step S39.

In step S39, the processor 102 determines whether or not to end the display. In a case in which a determination result in step S39 is No determination, the processor 102 proceeds to step S31. On the other hand, in a case in which the determination result in step S39 is Yes determination, the processor 102 ends the flowchart in Fig. 11.

Although not shown in Fig. 11, in a case in which an instruction other than changing of the display magnification and ending the display is received, the processor 102 may execute processing corresponding to the received instruction.

### <<Example of Display Aspect other than Rectangular Frame>>

In the present embodiment, the example has been described in which the rectangular frame is displayed as the information for informing of the detection position of the defect, but an aspect of visually appealing and displaying the information for informing of the detection position is not limited to the rectangular frame. For example, instead of the rectangular frame, a circular frame may be used, or another polygonal frame or a closed curve may be used. In addition, the information for informing of the detection position is not limited to an aspect as being displayed as an enclosing frame, and a frame line may be displayed as a broken line, or, for example, bracket marks indicating four corners of a rectangle may be displayed or arrow marks may be displayed.

### <<Example of Display Aspect other than Segmentation Mask>>

In the present embodiment, the example of the segmentation mask display has been described as an aspect of displaying the region information including the shape feature of the defect, but the aspect of displaying the region information is not limited to the segmentation mask. For example, a contour line (outline) of the defect region may be generated based on the region information, and the contour line of the defect region may be displayed instead of or in addition to the segmentation mask.

### <<Type of Image>>

The image to be processed is not limited to the X-ray transmission image, and the image to be processed may be an image generated by receiving reflected light of a ray such as visible light and/or infrared light with an image sensor or may be an image captured using a scanning electron microscope (SEM). In addition, the image is not limited to a two-dimensional image, and may be, for example, a three-dimensional image obtained by three-dimensionally reconstructing a large number of continuously obtained two-dimensional slice images such as a three-dimensional computed tomography (CT) image. In a case of handling a three-dimensional image, a concept of a pixel in a two-dimensional image can be understood by replacing the pixel with a voxel, and a concept of an area of a region in a two-dimensional image can be understood by replacing the area with a volume of a spatial region in a three-dimensional image.

### <<Configuration Example of Imaging System>>

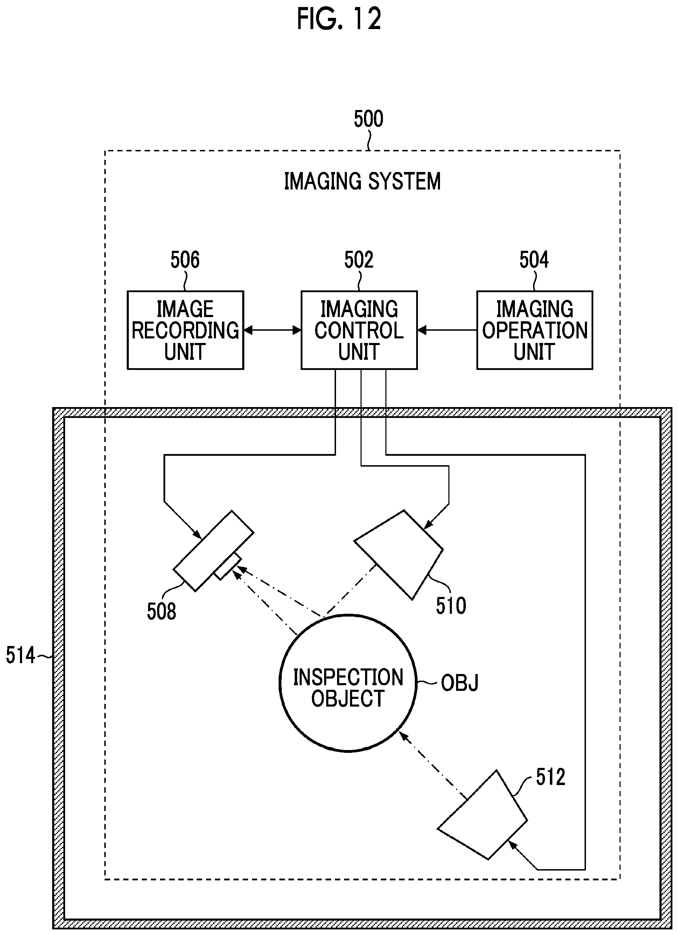

Next, an example of an imaging system 500 for capturing an image of an inspection object OBJ will be described. Fig. 12 is a block diagram schematically showing a configuration example of the imaging system 500. The imaging system 500 is used for imaging the inspection object OBJ placed in an imaging room 514, and comprises an imaging control unit 502, an imaging operation unit 504, an image recording unit 506, a camera 508, and radiation sources 510 and 512.

The imaging control unit 502 includes a CPU that controls an operation of each unit of the imaging system 500. The imaging control unit 502 receives an operation input from an operator (imaging technician) via the imaging operation unit 504, and transmits a control signal corresponding to the operation input to each unit of the imaging system 500 to control the operation of each unit.

The imaging operation unit 504 includes an input device that receives an operation input from the operator. The operator can input information about the inspection object OBJ, input an instruction of imaging conditions to the camera 508 and an instruction of imaging execution, input an instruction of irradiation conditions of radiation to the radiation sources 510 and 512, and input an instruction to record an image obtained by performing imaging on the image recording unit 506, via the imaging operation unit 504. The imaging conditions include, for example, imaging conditions such as an exposure time, a focal length, and a stop, an imaging angle, and an imaging point. The irradiation conditions of the radiation include an irradiation start time, an irradiation duration time, an irradiation angle, an irradiation intensity, and the like.

The image recording unit 506 records image data (light-receiving image) of the inspection object OBJ imaged by the camera 508. The image recording unit 506 records information for specifying the inspection object OBJ in association with the image data.

The camera 508 and the radiation sources 510 and 512 are disposed inside the imaging room 514. The radiation sources 510 and 512 are, for example, X-ray sources, and a partition wall and an entrance between the imaging room 514 and the outside are protected from X-ray by an X-ray protective material (for example, lead or concrete). In a case in which the inspection object OBJ is irradiated with visible light for imaging, it is not necessary to use the imaging room 514 with protection.

The radiation sources 510 and 512 irradiate the inspection object OBJ placed in the imaging room 514 with radiation in response to the instruction from the imaging control unit 502.

The camera 508 receives radiation emitted to the inspection object OBJ from the radiation source 510 and reflected by the inspection object OBJ or radiation emitted to the inspection object OBJ from the radiation source 512 and transmitted through the inspection object OBJ, and images the inspection object OBJ, in response to the instruction of the imaging execution from the imaging control unit 502. The inspection object OBJ is held in the imaging room 514 by a holding member (not shown) (for example, a manipulator, a mounting table, or a movable mounting table), and a distance and an angle of the inspection object OBJ with respect to the camera 508 and the radiation sources 510 and 512 can be adjusted. The operator can control relative positions of the inspection object OBJ, the camera 508, and the radiation sources 510 and 512 via the imaging control unit 502, and can image a desired location of the inspection object OBJ.

The radiation sources 510 and 512 end the irradiation of the inspection object OBJ with the radiation in synchronization with the end of the execution of the imaging by the camera 508.

In the example shown in Fig. 12, the camera 508 is disposed inside the imaging room 514, but the camera 508 may be disposed outside as long as it can image the inspection object OBJ in the imaging room 514. In addition, in the example shown in Fig. 12, one camera 508 and two radiation sources 510 and 512 are provided, but the number of the cameras and the radiation sources is not limited to this. For example, there may be a plurality of the cameras and a plurality of the radiation sources, or there may be one camera and one radiation source. The imaging control unit 502, the imaging operation unit 504, and the image recording unit 506 can be realized using a combination of hardware and software of a computer.

The information processing apparatus 10 may be communicably connected to the imaging system 500, or the information processing apparatus 10 may be configured to function as the imaging control unit 502, the imaging operation unit 504, and the image recording unit 506 of the imaging system 500.

### < <Program for Operating Computer> >

It is possible to record a program for causing a computer to realize a part or all of the processing functions of the information processing apparatus 10, on an optical disk, a magnetic disk, or a computer-readable medium such as a semiconductor memory or other tangible non-transitory information storage medium, and to provide the program through this information storage medium.

Instead of storing and providing the program in such a non-transitory computer-readable medium, it is also possible to provide a program signal as a download service by using an electric communication line such as the Internet.

A part or all of the processing functions in the information processing apparatus 10 may be realized by cloud computing, or may be provided as software as a service (SasS).

### <<Hardware Configuration of Each Processing Unit>>

A hardware structure of processing units that execute various types of processing, such as the image acquisition unit 12, the region extraction unit 14, the segmentation mask generation unit 15, the position information generation unit 16, the rectangular frame generation unit 17, the size determination unit 18, the detection size determination unit 24, the display size determination unit 25, the display aspect selection unit 20, the display control unit 22, and the display magnification control unit 28 in the information processing apparatus 10 is, for example, various processors as described below.

The various processors include a CPU that is a general-purpose processor that functions as various processing units by executing a program, a GPU which is a processor specialized for image processing, a programmable logic device (PLD) that is a processor of which a circuit configuration can be changed after manufacture, such as a field programmable gate array (FPGA), a dedicated electric circuit that is a processor having a circuit configuration specifically designed to execute specific processing, such as an application specific integrated circuit (ASIC), and the like.

One processing unit may be configured of one of the various types of processors, or configured of a combination of two or more processors of the same type or different types. For example, one processing unit may be configured of a plurality of FPGAs, a combination of a CPU and an FPGA, or a combination of a CPU and a GPU. In addition, a plurality of processing units may be configured of one processor. As an example of configuring a plurality of processing units with one processor, first, there is a form in which, as typified by computers such as a client and a server, one processor is configured by combining one or more CPUs and software, and the processor functions as a plurality of processing units. Second, there is a form in which, as typified by a system on chip (SoC) and the like, a processor that realizes functions of the entire system including a plurality of processing units with one integrated circuit (IC) chip is used. As described above, the various processing units are configured using one or more of the various processors as a hardware structure.

The hardware structure of these various processors is more specifically an electric circuit (circuitry) in which circuit elements such as semiconductor elements are combined.

### <<Advantages of Present Embodiment>>

The information processing apparatus 10 according to the present embodiment has the following advantages.
[1] The region extraction type AI represented by the segmentation model SM can extract a region of a detection target from an image with high accuracy, and can detect a minute defect and understand a shape of the defect.
[2] The information processing apparatus 10 controls an aspect of the display (method of display) for the generated defect according to at least one of a detection size understood from region information of the defect extracted by processing of the region extraction or a display size on the display screen of the defect understood based on the detection size and display conditions. Since an easily visible rectangular frame is displayed for a minute defect that is easy to be overlooked, the overlooking is prevented, and the defect can be visually evaluated without omission.
[3] The information processing apparatus 10 can automatically detect (extract) a defect signal by image processing using AI from an X-ray transmission image obtained by X-ray imaging of various minute defects generated during molding of a metal component by casting or forging and welding of the metal component, and can present defect information to an inspector in an easily visible manner.
[4] The technique of controlling the display of the detection result of the defect, which is realized by the information processing apparatus 10, is not limited to the detection of the defect and can be applied to various fields.

### <<Other Application Examples>>

In the above-described embodiment, the example of the information processing apparatus 10 applied to a defect inspection apparatus for an industrial product has been described, but the application range of the present disclosure is not limited to this example. The technique of the present disclosure can be widely applied to an apparatus that detects a specific target from an image and displays information indicating a region and/or a position of the target, such as an apparatus that detects a printing defect from a printed material and displays a detection result, or an apparatus that detects a lesion from a medical image and displays a detection result.

### <<Modification Example 1>>

The processing function of the information processing apparatus 10 may be realized by using a plurality of information processing apparatuses. For example, a computer system in which a first information processing apparatus and a second information processing apparatus are connected via a communication line may be adopted, and processing functions of the image acquisition unit 12, the region extraction unit 14, and the position information generation unit 16 may be implemented in the first information processing apparatus, and processing functions of the rectangular frame generation unit 17, the size determination unit 18, the display aspect selection unit 20, and the display control unit 22 may be implemented in the second information processing apparatus. The communication line may be a local area network or a wide area network.

In this case, the first information processing apparatus generates the region information and the position information of the defect, which is the detection target, from the image to be processed. The second information processing apparatus acquires the region information and the position information of the defect generated by the first information processing apparatus, and switches the display aspect in accordance with the determination result of the size determination unit 18. Display data obtained through the processing by the second information processing apparatus can be transmitted to another terminal device via a communication line, and a result of the processing can be displayed on a display device of the terminal device.

### <<Modification Example 2>>

In the above-described embodiment, the example has been described in which the processing of the region extraction is executed using the segmentation model SM, but an image processing method of automatically extracting the region of the detection target from an image is not limited to this example, and various region extraction methods can be applied.

### <<Modification Example 3>>

In the above-described embodiment, although the example has been described in which a still picture is processed as an image, the imaging device may capture a video image, and the information processing apparatus 10 may extract a part of frames from the captured video image and perform the same processing.

### <<Others>>

The present disclosure is not limited to the above-described embodiment, and various modifications can be made.

### Explanation of References

10: information processing apparatus
12: image acquisition unit
14: region extraction unit
15: segmentation mask generation unit
16: position information generation unit
17: rectangular frame generation unit
18: size determination unit
20: display aspect selection unit
22: display control unit
24: detection size determination unit
25: display size determination unit
28: display magnification control unit
32: input device
34: display device
50: metal component
51: first component portion
52: second component portion
54: background
102: processor
104: computer-readable medium
106: communication interface
108: input/output interface
110: bus
114: region extraction program
115: segmentation mask generation program
116: position information generation program
117: rectangular frame generation program
118: size determination program
120: display aspect selection program
122: display control program
500: imaging system
502: imaging control unit
504: imaging operation unit
506: image recording unit
508: camera
510: radiation source
512: radiation source
514: imaging room
SM: segmentation model
DA1, DA2, DA3: defect region
RF2, RF3: rectangular frame
IM: image
IMG1, IMG2, IMG3, IMG4: inspection image
OBJ: inspection object
S11 to S39: step of information processing method

## Claims

1. An information processing apparatus (10) comprising:
a processor (102),
wherein the processor (102)
acquires an image (IM),
executes processing of region extraction to extract a region of a detection target from the image (IM), and
generates position information of the region from region information of the extracted region,
**characterized in that**
the processer displays a result of the processing of the region extraction by switching between a first display aspect in which information for informing of a position of the region is displayed on a display screen based on the position information in a visually appealing manner and a second display aspect in which the region information is displayed in an aspect different from the first display aspect according to at least one of a size of the extracted region or a display size of the region displayed on the display screen, the first display aspect including displaying a rectangular frame (RF2, RF3), a circular frame, a polygonal frame, a closed curve, a broken frame line, bracket marks indicating four corners of a rectangle, or arrow marks, wherein the processor (102)
performs display in the first display aspect in a case in which the size of the extracted region is smaller than a first reference size, and
performs display in the second display aspect in a case in which the size of the extracted region is larger than the first reference size.

2. The information processing apparatus (10) according to claim 1,
wherein the first display aspect is an aspect which causes the information for informing of the position of the region to be displayed with a size set in advance,
or,
wherein the first display aspect is an aspect which causes the information for informing of the position of the region to be displayed with a fixed size set in advance.

3. The information processing apparatus according to claim 1 or 2,
wherein, in a case where the size of the extracted region is smaller than the first reference size, the processor displays the region information, and displays the information for informing of the position of the region with the first display aspect.

4. An information processing apparatus (10) comprising:
a processor (102),
wherein the processor (102)
acquires an image (IM),
executes processing of region extraction to extract a region of a detection target from the image (IM), and
generates position information of the region from region information of the extracted region,
**characterized in that**
the processer displays a result of the processing of the region extraction by switching between a first display aspect in which information for informing of a position of the region is displayed on a display screen based on the position information in a visually appealing manner and a second display aspect in which the region information is displayed in an aspect different from the first display aspect according to at least one of a size of the extracted region or a display size of the region displayed on the display screen,
the first display aspect including displaying a rectangular frame (RF2, RF3), a circular frame, a polygonal frame, a closed curve, a broken frame line, bracket marks indicating four corners of a rectangle, or arrow marks,
wherein the processor (102)
performs display in the first display aspect in a case in which the display size of the region displayed on the display screen is smaller than a second reference size, and
performs display in the second display aspect in a case in which the display size is larger than the second reference size.

5. The information processing apparatus (10) according to claim 4,
wherein the processor (102)
receives an instruction to perform enlargement display and reduction display,
changes a display magnification of the display screen in accordance with the received instruction, and
switches between the first display aspect and the second display aspect in accordance with the display magnification.

6. The information processing apparatus according to claim 4 or 5,
wherein, in a case where the size of the extracted region is smaller than a first reference size, the processor displays the region information, and displays the information for informing of the position of the region with the first display aspect.

7. The information processing apparatus (10) according to any one of claims 1 to 6,
wherein the processor (102) uses a segmentation model that performs image segmentation to execute the processing of the region extraction.

8. The information processing apparatus (10) according to claim 7,
wherein the segmentation model is a learning model trained using machine learning to extract the region of the detection target from an input image.

9. The information processing apparatus (10) according to any one of claims 1 to 8,
wherein the position information includes information indicating a position of a centroid or a center of a circumscribed rectangle of the extracted region.

10. The information processing apparatus (10) according to any one of claims 1 to 9,
wherein the second display aspect includes segmentation mask display in which the extracted region is filled and displayed.

11. The information processing apparatus (10) according to any one of claims 1 to 10,
wherein the second display aspect includes causing a contour line of the extracted region to be displayed.

12. The information processing apparatus (10) according to any one of claims 1 to 11,
wherein the first display aspect includes causing a rectangular frame, circular frame, a polygonal frame, a closed curve or an enclosing frame as the information for informing of the position of the region to be displayed in a blinking manner.

13. An information processing method executed by an information processing apparatus (10), the method comprising:
acquiring an image (IM);
executing processing of region extraction to extract a region of a detection target from the image (IM); and
generating position information of the region from region information of the extracted region;
the method is **characterized by**
displaying a result of the processing of the region extraction by switching between a first display aspect in which information for informing of a position of the region is displayed on a display screen based on the position information in a visually appealing manner and a second display aspect in which the region information is displayed in an aspect different from the first display aspect according to at least one of a size of the extracted region or a display size of the region displayed on the display screen, the first display aspect including displaying a rectangular frame (RF2, RF3), a circular frame, a polygonal frame, a closed curve, a broken frame line, bracket marks indicating four corners of a rectangle, or arrow marks,
wherein the processor (102)
performs display in the first display aspect in a case in which the size of the extracted region is smaller than a first reference size, and
performs display in the second display aspect in a case in which the size of the extracted region is larger than the first reference size.

14. An information processing method executed by an information processing apparatus (10), the method comprising:
acquiring an image (IM);
executing processing of region extraction to extract a region of a detection target from the image (IM); and
generating position information of the region from region information of the extracted region;
the method is **characterized by**
displaying a result of the processing of the region extraction by switching between a first display aspect in which information for informing of a position of the region is displayed on a display screen based on the position information in a visually appealing manner and a second display aspect in which the region information is displayed in an aspect different from the first display aspect according to at least one of a size of the extracted region or a display size of the region displayed on the display screen, the first display aspect including displaying a rectangular frame (RF2, RF3), a circular frame, a polygonal frame, a closed curve, a broken frame line, bracket marks indicating four corners of a rectangle, or arrow marks,
wherein the processor (102)
performs display in the first display aspect in a case in which the display size of the region displayed on the display screen is smaller than a second reference size, and
performs display in the second display aspect in a case in which the display size is larger than the second reference size.

15. A non-transitory computer-readable recording medium on which a program for causing a computer to execute the information processing method according to claim 13 or 14 is recorded.

## Patentansprüche

1. Informationsverarbeitungsvorrichtung (10), umfassend:
einen Prozessor (102),
wobei der Prozessor (102)
ein Bild (IM) erfasst,
Verarbeitung von Bereichsextraktion ausführt, um einen Bereich eines Detektionsziels aus dem Bild (IM) zu extrahieren, und
Positionsinformationen des Bereichs aus Bereichsinformationen des extrahierten Bereichs erzeugt,
**dadurch gekennzeichnet, dass**
der Prozessor ein Ergebnis der Verarbeitung der Bereichsextraktion durch Umschalten zwischen einer ersten Anzeigeansicht, bei der Informationen zum Informieren über eine Position des Bereichs auf einem Anzeigebildschirm auf der Grundlage der Positionsinformationen in einer visuell ansprechenden Weise angezeigt werden, und
einer zweiten Anzeigeansicht, bei der die Bereichsinformationen in einer Ansicht, die sich von der ersten Anzeigeansicht unterscheidet, angezeigt werden, gemäß mindestens einer von einer Größe des extrahierten Bereichs und einer Anzeigegröße des auf dem Anzeigebildschirm angezeigten Bereichs anzeigt, wobei die erste Anzeigeansicht Anzeigen eines rechteckigen Rahmens (RF2, RF3), eines kreisförmigen Rahmens, eines polygonalen Rahmens, einer geschlossenen Kurve, einer unterbrochenen Rahmenlinie, von Klammermarkierungen, die vier Ecken eines Rechtecks angeben, oder von Pfeilmarkierungen enthält,
wobei der Prozessor (102)
Anzeige in der ersten Anzeigeansicht in einem Fall, in dem die Größe des extrahierten Bereichs kleiner als eine erste Referenzgröße ist, durchführt, und Anzeige in der zweiten Anzeigeansicht in einem Fall, in dem die Größe des extrahierten Bereichs größer als die erste Referenzgröße ist, durchführt.

2. Informationsverarbeitungsvorrichtung (10) nach Anspruch 1,
wobei die erste Anzeigeansicht eine Ansicht ist, die veranlasst, dass die Informationen zum Informieren über die Position des Bereichs mit einer im Voraus eingestellten Größe angezeigt werden,
oder
wobei die erste Anzeigeansicht eine Ansicht ist, die veranlasst, dass die Informationen zum Informieren über die Position des Bereichs mit einer im Voraus eingestellten festen Größe angezeigt werden.

3. Informationsverarbeitungsvorrichtung nach Anspruch 1 oder 2,
wobei in einem Fall, in dem die Größe des extrahierten Bereichs kleiner als die erste Referenzgröße ist, der Prozessor die Bereichsinformationen anzeigt und die Informationen zum Informieren über die Position des Bereichs mit der ersten Anzeigeansicht anzeigt.

4. Informationsverarbeitungsvorrichtung (10), umfassend:
einen Prozessor (102),
wobei der Prozessor (102)
ein Bild (IM) erfasst,
Verarbeitung von Bereichsextraktion ausführt, um einen Bereich eines Detektionsziels aus dem Bild (IM) zu extrahieren, und
Positionsinformationen des Bereichs aus Bereichsinformationen des extrahierten Bereichs erzeugt,
**dadurch gekennzeichnet, dass**
der Prozessor ein Ergebnis der Verarbeitung der Bereichsextraktion durch Umschalten zwischen einer ersten Anzeigeansicht, bei der Informationen zum Informieren über eine Position des Bereichs auf einem Anzeigebildschirm auf der Grundlage der Positionsinformationen in einer visuell ansprechenden Weise angezeigt werden, und
einer zweiten Anzeigeansicht, bei der die Bereichsinformationen in einer Ansicht, die sich von der ersten Anzeigeansicht unterscheidet, angezeigt werden, gemäß mindestens einer von einer Größe des extrahierten Bereichs und einer Anzeigegröße des auf dem Anzeigebildschirm angezeigten Bereichs anzeigt,
wobei die erste Anzeigeansicht Anzeigen eines rechteckigen Rahmens (RF2, RF3), eines kreisförmigen Rahmens, eines polygonalen Rahmens, einer geschlossenen Kurve, einer unterbrochenen Rahmenlinie, von Klammermarkierungen, die vier Ecken eines Rechtecks angeben, oder von Pfeilmarkierungen enthält,
wobei der Prozessor (102)
Anzeige in der ersten Anzeigeansicht in einem Fall, in dem die Anzeigegröße des auf dem Anzeigebildschirm angezeigten Bereichs kleiner als eine zweite Referenzgröße ist, durchführt, und
Anzeige in der zweiten Anzeigeansicht in einem Fall, in dem die Anzeigegröße größer als die zweite Referenzgröße ist, durchführt.

5. Informationsverarbeitungsvorrichtung (10) nach Anspruch 4,
wobei der Prozessor (102)
eine Anweisung zum Durchführen von Vergrößerungsanzeige und Verkleinerungsanzeige empfängt,
eine Anzeigevergrößerung des Anzeigebildschirms in Übereinstimmung mit der empfangenen Anweisung ändert, und
zwischen der ersten Anzeigeansicht und der zweiten Anzeigeansicht in Übereinstimmung mit der Anzeigevergrößerung umschaltet.

6. Informationsverarbeitungsvorrichtung nach Anspruch 4 oder 5,
wobei in einem Fall, in dem die Größe des extrahierten Bereichs kleiner als eine erste Referenzgröße ist, der Prozessor die Bereichsinformationen anzeigt und die Informationen zum Informieren über die Position des Bereichs mit der ersten Anzeigeansicht anzeigt.

7. Informationsverarbeitungsvorrichtung (10) nach einem der Ansprüche 1 bis 6,
wobei der Prozessor (102) ein Segmentierungsmodell, das Bildsegmentierung durchführt, verwendet, um die Verarbeitung der Bereichsextraktion auszuführen.

8. Informationsverarbeitungsvorrichtung (10) nach Anspruch 7,
wobei das Segmentierungsmodell ein Lernmodell ist, das unter Verwendung von maschinellem Lernen trainiert worden ist, um den Bereich des Detektionsziels aus einem Eingabebild zu extrahieren.

9. Informationsverarbeitungsvorrichtung (10) nach einem der Ansprüche 1 bis 8,
wobei die Positionsinformationen Informationen enthalten, die eine Position eines Schwerpunkts oder einer Mitte eines umschreibenden Rechtecks des extrahierten Bereichs angeben.

10. Informationsverarbeitungsvorrichtung (10) nach einem der Ansprüche 1 bis 9,
wobei die zweite Anzeigeansicht Segmentierungsmaskenanzeige enthält, bei der der extrahierte Bereich ausgefüllt und angezeigt wird.

11. Informationsverarbeitungsvorrichtung (10) nach einem der Ansprüche 1 bis 10,
wobei die zweite Anzeigeansicht Veranlassen, dass eine Konturlinie des extrahierten Bereichs angezeigt wird, enthält.

12. Informationsverarbeitungsvorrichtung (10) nach einem der Ansprüche 1 bis 11,
wobei die erste Anzeigeansicht Veranlassen, dass ein rechteckiger Rahmen, ein kreisförmiger Rahmen, ein polygonaler Rahmen, eine geschlossene Kurve oder ein umschließender Rahmen als die Informationen zum Informieren über die Position des Bereichs auf eine blinkende Weise angezeigt werden, enthält.

13. Informationsverarbeitungsverfahren, das von einer Informationsverarbeitungsvorrichtung (10) ausgeführt wird, wobei das Verfahren umfasst:
Erfassen eines Bildes (IM);
Ausführen von Verarbeitung von Bereichsextraktion, um einen Bereich eines Detektionsziels aus dem Bild (IM) zu extrahieren; und
Erzeugen von Positionsinformationen des Bereichs aus Bereichsinformationen des extrahierten Bereichs;
wobei das Verfahren **dadurch gekennzeichnet ist, dass**
ein Ergebnis der Verarbeitung der Bereichsextraktion durch Umschalten zwischen einer ersten Anzeigeansicht, bei der Informationen zum Informieren über eine Position des Bereichs auf einem Anzeigebildschirm auf der Grundlage der Positionsinformationen in einer visuell ansprechenden Weise angezeigt werden, und
einer zweiten Anzeigeansicht, bei der die Bereichsinformationen in einer Ansicht, die sich von der ersten Anzeigeansicht unterscheidet, angezeigt werden, gemäß mindestens einer von einer Größe des extrahierten Bereichs und einer Anzeigegröße des auf dem Anzeigebildschirm angezeigten Bereichs angezeigt wird, wobei die erste Anzeigeansicht Anzeigen eines rechteckigen Rahmens (RF2, RF3), eines kreisförmigen Rahmens, eines polygonalen Rahmens, einer geschlossenen Kurve, einer unterbrochenen Rahmenlinie, von Klammermarkierungen, die vier Ecken eines Rechtecks angeben, oder von Pfeilmarkierungen enthält,
wobei der Prozessor (102)
Anzeige in der ersten Anzeigeansicht in einem Fall, in dem die Größe des extrahierten Bereichs kleiner als eine erste Referenzgröße ist, durchführt, und
Anzeige in der zweiten Anzeigeansicht in einem Fall, in dem die Größe des extrahierten Bereichs größer als die erste Referenzgröße ist, durchführt.

14. Informationsverarbeitungsverfahren, das von einer Informationsverarbeitungsvorrichtung (10) ausgeführt wird, wobei das Verfahren umfasst:
Erfassen eines Bildes (IM);
Ausführen von Verarbeitung von Bereichsextraktion, um einen Bereich eines Detektionsziels aus dem Bild (IM) zu extrahieren; und
Erzeugen von Positionsinformationen des Bereichs aus Bereichsinformationen des extrahierten Bereichs;
wobei das Verfahren **dadurch gekennzeichnet ist, dass**
ein Ergebnis der Verarbeitung der Bereichsextraktion durch Umschalten zwischen einer ersten Anzeigeansicht, bei der Informationen zum Informieren über eine Position des Bereichs auf einem Anzeigebildschirm auf der Grundlage der Positionsinformationen in einer visuell ansprechenden Weise angezeigt werden, und
einer zweiten Anzeigeansicht, bei der die Bereichsinformationen in einer Ansicht, die sich von der ersten Anzeigeansicht unterscheidet, angezeigt werden, gemäß mindestens einer von einer Größe des extrahierten Bereichs und einer Anzeigegröße des auf dem Anzeigebildschirm angezeigten Bereichs angezeigt wird, wobei die erste Anzeigeansicht Anzeigen eines rechteckigen Rahmens (RF2, RF3), eines kreisförmigen Rahmens, eines polygonalen Rahmens, einer geschlossenen Kurve, einer unterbrochenen Rahmenlinie, von Klammermarkierungen, die vier Ecken eines Rechtecks angeben, oder von Pfeilmarkierungen enthält,
wobei der Prozessor (102)
Anzeige in der ersten Anzeigeansicht in einem Fall, in dem die Anzeigegröße des auf dem Anzeigebildschirm angezeigten Bereichs kleiner als eine zweite Referenzgröße ist, durchführt, und
Anzeige in der zweiten Anzeigeansicht in einem Fall, in dem die Anzeigegröße größer als die zweite Referenzgröße ist, durchführt.

15. Nicht flüchtiges computerlesbares Aufzeichnungsmedium, auf dem ein Programm zum Veranlassen eines Computers, das Informationsverarbeitungsverfahren nach Anspruch 13 oder 14 auszuführen, aufgezeichnet ist.

## Revendications

1. Appareil de traitement d'informations (10) comprenant :
un processeur (102),
dans lequel le processeur (102)
acquiert une image (IM),
exécute un traitement d'extraction de région pour extraire une région d'une cible de détection de l'image (IM), et
génère des informations de position de la région à partir des informations de région de la région extraite,
**caractérisé en ce que**
le processeur affiche un résultat du traitement de l'extraction de région en commutant entre un premier aspect d'affichage dans lequel des informations pour indiquer une position de la région sont affichées sur un écran d'affichage sur la base des informations de position d'une manière visuellement attrayante, et un deuxième aspect d'affichage dans lequel les informations de région sont affichées dans un aspect différent du premier aspect d'affichage en fonction d'au moins l'une d'une taille de la région extraite ou d'une taille d'affichage de la région affichée sur l'écran d'affichage, le premier aspect d'affichage incluant l'affichage d'un cadre rectangulaire (RF2, RF3), d'un cadre circulaire, d'un cadre polygonal, d'une courbe fermée, d'une ligne de cadre brisée, de marques de crochet indiquant quatre coins d'un rectangle ou de marques de flèche,
dans lequel le processeur (102)
effectue un affichage dans le premier aspect d'affichage dans un cas où la taille de la région extraite est inférieure à une première taille de référence, et
effectue un affichage dans le deuxième aspect d'affichage dans un cas où la taille de la région extraite est supérieure à la première taille de référence.

2. Appareil de traitement d'informations (10) selon la revendication 1,
dans lequel le premier aspect d'affichage est un aspect qui amène les informations pour indiquer la position de la région à être affichées avec une taille définie à l'avance,
ou,
dans lequel le premier aspect d'affichage est un aspect qui amène les informations pour indiquer la position de la région à être affichées avec une taille fixe définie à l'avance.

3. Appareil de traitement d'informations selon la revendication 1 ou la revendication 2, dans lequel, dans un cas où la taille de la région extraite est inférieure à la première taille de référence, le processeur affiche les informations de région et affiche les informations pour indiquer la position de la région avec le premier aspect d'affichage.

4. Appareil de traitement d'informations (10) comprenant :
un processeur (102),
dans lequel le processeur (102)
acquiert une image (IM),
exécute un traitement d'extraction de région pour extraire une région d'une cible de détection de l'image (IM), et
génère des informations de position de la région à partir des informations de région de la région extraite,
**caractérisé en ce que**
le processeur affiche un résultat du traitement de l'extraction de région en commutant entre un premier aspect d'affichage dans lequel des informations pour indiquer une position de la région sont affichées sur un écran d'affichage sur la base des informations de position d'une manière visuellement attrayante, et un deuxième aspect d'affichage dans lequel les informations de région sont affichées dans un aspect différent du premier aspect d'affichage en fonction d'au moins l'une d'une taille de la région extraite ou d'une taille d'affichage de la région affichée sur l'écran d'affichage, le premier aspect d'affichage incluant l'affichage d'un cadre rectangulaire (RF2, RF3), d'un cadre circulaire, d'un cadre polygonal, d'une courbe fermée, d'une ligne de cadre brisée, de marques de crochet indiquant quatre coins d'un rectangle ou de marques de flèche,
dans lequel le processeur (102)
effectue un affichage dans le premier aspect d'affichage dans un cas où la taille d'affichage de la région affichée sur l'écran d'affichage est inférieure à une deuxième taille de référence, et
effectue un affichage dans le deuxième aspect d'affichage dans un cas où la taille d'affichage est supérieure à la deuxième taille de référence.

5. Appareil de traitement d'informations (10) selon la revendication 4,
dans lequel le processeur (102)
reçoit une instruction pour effectuer un affichage d'agrandissement et un affichage de réduction,
modifie un agrandissement d'affichage de l'écran d'affichage conformément à l'instruction reçue, et
commute entre le premier aspect d'affichage et le deuxième aspect d'affichage conformément à l'agrandissement d'affichage.

6. Appareil de traitement d'informations selon la revendication 4 ou la revendication 5,
dans lequel, dans un cas où la taille de la région extraite est inférieure à une première taille de référence, le processeur affiche les informations de région et affiche les informations pour indiquer la position de la région avec le premier aspect d'affichage.

7. Appareil de traitement d'informations (10) selon l'une quelconque des revendications 1 à 6,
dans lequel le processeur (102) utilise un modèle de segmentation qui effectue une segmentation d'images pour exécuter le traitement de l'extraction de région.

8. Appareil de traitement d'informations (10) selon la revendication 7,
dans lequel le modèle de segmentation est un modèle d'apprentissage entraîné en utilisant l'apprentissage automatique pour extraire la région de la cible de détection à partir d'une image d'entrée.

9. Appareil de traitement d'informations (10) selon l'une quelconque des revendications 1 à 8,
dans lequel les informations de position incluent des informations indiquant une position d'un centroïde ou d'un centre d'un rectangle circonscrit de la région extraite.

10. Appareil de traitement d'informations (10) selon l'une quelconque des revendications 1 à 9,
dans lequel le deuxième aspect d'affichage inclut un affichage de masque de segmentation dans lequel la région extraite est remplie et affichée.

11. Appareil de traitement d'informations (10) selon l'une quelconque des revendications 1 à 10,
dans lequel le deuxième aspect d'affichage inclut l'affichage d'une ligne de contour de la région extraite.

12. Appareil de traitement d'informations (10) selon l'une quelconque des revendications 1 à 11,
dans lequel le premier aspect d'affichage inclut l'affichage d'un cadre rectangulaire, d'un cadre circulaire, d'un cadre polygonal, d'une courbe fermée ou d'un cadre englobant comme informations pour indiquer la position de la région de manière clignotante.

13. Procédé de traitement d'informations exécuté par un appareil de traitement d'informations (10), le procédé comprenant :
acquérir une image (IM) ;
exécuter un traitement d'extraction de région pour extraire une région d'une cible de détection de l'image (IM) ; et
générer des informations de position de la région à partir des informations de région de la région extraite ;
le procédé est **caractérisé par**
afficher un résultat du traitement de l'extraction de région en commutant entre un premier aspect d'affichage dans lequel des informations pour indiquer une position de la région sont affichées sur un écran d'affichage sur la base des informations de position d'une manière visuellement attrayante, et un deuxième aspect d'affichage dans lequel les informations de région sont affichées dans un aspect différent du premier aspect d'affichage en fonction d'au moins l'une d'une taille de la région extraite ou d'une taille d'affichage de la région affichée sur l'écran d'affichage, le premier aspect d'affichage incluant l'affichage d'un cadre rectangulaire (RF2, RF3), d'un cadre circulaire, d'un cadre polygonal, d'une courbe fermée, d'une ligne de cadre brisée, de marques de crochet indiquant quatre coins d'un rectangle ou de marques de flèche,
dans lequel le processeur (102)
effectue un affichage dans le premier aspect d'affichage dans un cas où la taille de la région extraite est inférieure à une première taille de référence, et
effectue un affichage dans le deuxième aspect d'affichage dans un cas où la taille de la région extraite est supérieure à la première taille de référence.

14. Procédé de traitement d'informations exécuté par un appareil de traitement d'informations (10), le procédé comprenant :
acquérir une image (IM) ;
exécuter un traitement d'extraction de région pour extraire une région d'une cible de détection de l'image (IM) ; et
générer des informations de position de la région à partir des informations de région de la région extraite ;
le procédé est **caractérisé par**
afficher un résultat du traitement de l'extraction de région en commutant entre un premier aspect d'affichage dans lequel des informations pour indiquer une position de la région sont affichées sur un écran d'affichage sur la base des informations de position d'une manière visuellement attrayante, et un deuxième aspect d'affichage dans lequel les informations de région sont affichées dans un aspect différent du premier aspect d'affichage en fonction d'au moins l'une d'une taille de la région extraite ou d'une taille d'affichage de la région affichée sur l'écran d'affichage, le premier aspect d'affichage incluant l'affichage d'un cadre rectangulaire (RF2, RF3), d'un cadre circulaire, d'un cadre polygonal, d'une courbe fermée, d'une ligne de cadre brisée, de marques de crochet indiquant quatre coins d'un rectangle ou de marques de flèche,
dans lequel le processeur (102)
effectue un affichage dans le premier aspect d'affichage dans un cas où la taille d'affichage de la région affichée sur l'écran d'affichage est inférieure à une deuxième taille de référence, et
effectue un affichage dans le deuxième aspect d'affichage dans un cas où la taille d'affichage est supérieure à la deuxième taille de référence.

15. Support d'enregistrement non transitoire lisible par ordinateur sur lequel est enregistré un programme pour amener un ordinateur à exécuter le procédé de traitement d'informations selon la revendication 13 ou la revendication 14.
